# EUROPEAN PATENT SPECIFICATION

(11) **EP 3 315 924 B1**
(45) Date of publication and mention of the grant of the patent: **14.07.2021**
(21) Application number: 16195534.9
(22) Date of filing: 25.10.2016
(51) Int. Cl.: G01F 11/08

(54) **LIQUID DOSING APPARATUS**
FLÜSSIGKEITSDOSIERUNGSVORRICHTUNG
APPAREIL DE DOSAGE DE LIQUIDES

(43) Date of publication of application: 02.05.2018
(73) Proprietor: The Procter & Gamble Company, Cincinnati, OH 45202 (US)
(72) Inventor: HOEFTE, Paulus Antonius Augustinus, 1853 Strombeek-Bever (BE)
(74) Representative: P&G Patent Belgium UK

(56) References cited:
- EP-A2- 0 337 778
- WO-A1-2012/171708
- WO-A2-2005/049477
- US-A- 5 184 760
- US-A1- 2006 037 977
- US-A1- 2013 184 677

## Description

### FIELD OF INVENTION

The present invention relates to an apparatus and means of repeatedly dispensing controlled doses of liquid, while also varying the dosage volume.

### BACKGROUND OF THE INVENTION

It may be desirable to deliver a precise dose of a liquid and be able to vary and select the volume of this dose for different applications and different needs. It may also be desirable to provide a dosage system that does not rely solely on gravity or needs a bulky volumetric dosing chamber or requires a complex and large pumping mechanism. It may be particular desirable to deliver said benefits by simply inverting and squeezing a container whilst offering a compact, low cost and simple constructions.

For example, a large dose is desired when dosing a hard surface cleaning composition into a bucket of water for the general cleaning of floors. However, a smaller dose is desired when directly applying the hard surface cleaning composition onto the surface for spot cleaning a stain.

A large dose would also be desired for dosing a laundry liquid composition into a washing machine, while a smaller dose is desired for direct application onto a fabric stain.

EP2653842 relates to an apparatus and means of repeatedly dispensing controlled doses of liquid comprising a resiliently squeezable container for containing a liquid detergent composition; a cap operably connected to said container, the cap comprising a nozzle for expelling the liquid out of the container; a dosing chamber operably connected to the cap, wherein the dosing chamber comprises a base having a discharge opening therein, sidewalls extending upwardly along the perimeter of said base and at least one inlet opening located proximal the sidewalls; at least one aperture located proximal to the discharge opening; a plunger, provided in the dosing chamber and moveable relative to the chamber so as to advance upon squeezing of the container, up to a blocking position; a valve retaining means located below the base; a valve provided in the valve retaining mean wherein the valve is movable from an open position, allowing liquid flow through the discharge opening, and a closed position, where the valve blocks the discharge opening; wherein the liquid is a shear thinning liquid and the shear thinning liquid has a viscosity of greater than 150mPa.s measured at 10s⁻¹ at 20°C. EP2444782 relates to an apparatus and means of repeatedly dispensing controlled doses of liquid.

WO 2005049477 A2 relates to liquid dosing devices of the kind in which flow to a front discharge opening of a container is blocked after a controlled delay by a sliding piston movable in a control chamber mounted in a container neck behind the discharge opening. Movement of the piston is governed by restricted flow through control openings at the back of the control chamber. Restoration of the piston after a dosing operation is assisted by providing a dump valve at the rear of the control chamber. For simplicity and ease of construction, as well as effective sealing operation, the dump valve member is a ball retained in a cage. Another proposal provides a one-way valve in the outlet path, obviating the dump valve and enabling rapid recovery after a dosing operation when used with a resiliently squeezable container.

### SUMMARY OF THE INVENTION

A first aspect of the present invention relates to a dosing apparatus (1) for dispensing a dose of a liquid according to claim 1.

### BRIEF DESCRIPTION OF THE DRAWINGS

Fig. 1A is a front view of the dosing apparatus according to one embodiment of the present invention.
Fig. 1B is a side view of the dosing apparatus according to one embodiment of the present invention.

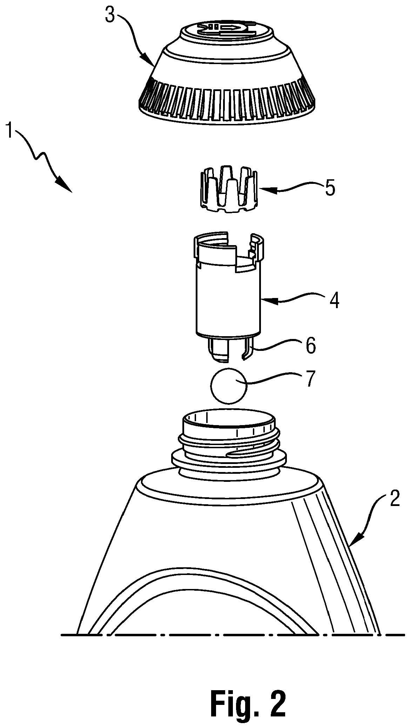

Fig. 2 is an exploded view of the dosing apparatus according to one embodiment not part of the present invention.
Fig. 3A is a cross-section taken along the line A-A of Fig. 1A of the dosing apparatus according to one embodiment not part of the present invention, wherein the flow restricting orifice (9) comprises an orifice (34) and an at least partially removable cover (35) which slides horizontally in order to alter the exposed cross-sectional area of the at least one flow restricting orifice (9). The at least partially removable cover (35) is positioned to close the at least one flow restricting orifice (9).
Fig. 3B illustrates the flow restricting orifice (9) of Fig. 3A, when viewed from above.
Fig. 4A is a cross-section taken along the line A-A of Fig. 1A of the dosing apparatus according to Fig. 3A, wherein the at least partially removable cover (35) is positioned to result in an intermediate dose through the at least one flow restricting orifice (9).
Fig. 4B illustrates the flow restricting orifice (9) of Fig. 4A, when viewed from above.
Fig. 5A is a cross-section taken along the line A-A of Fig. 1A of the dosing apparatus according to Fig. 3A, wherein the at least partially removable cover (35) is positioned to result in the largest dose through the at least one flow restricting orifice (9).
Fig. 5B illustrates the flow restricting orifice (9) of Fig. 5A, when viewed from above.

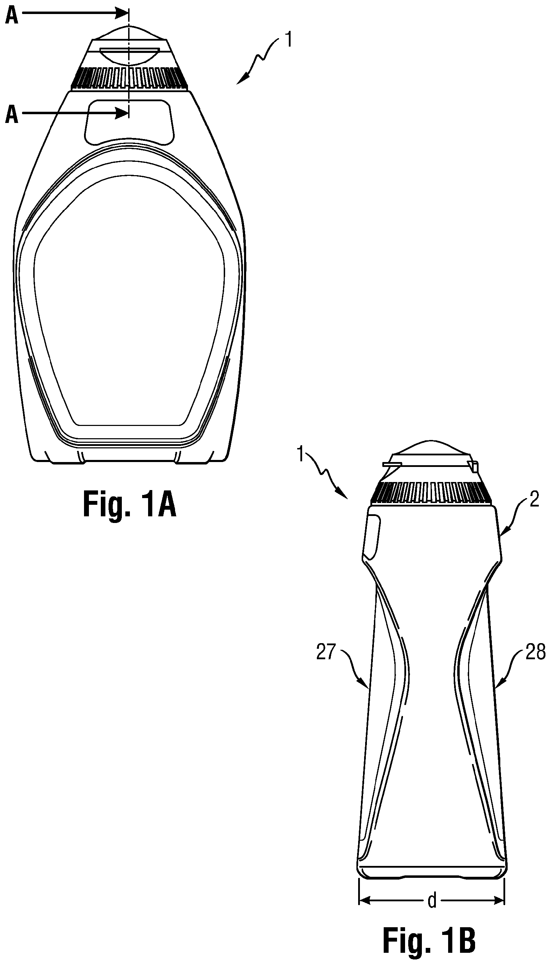

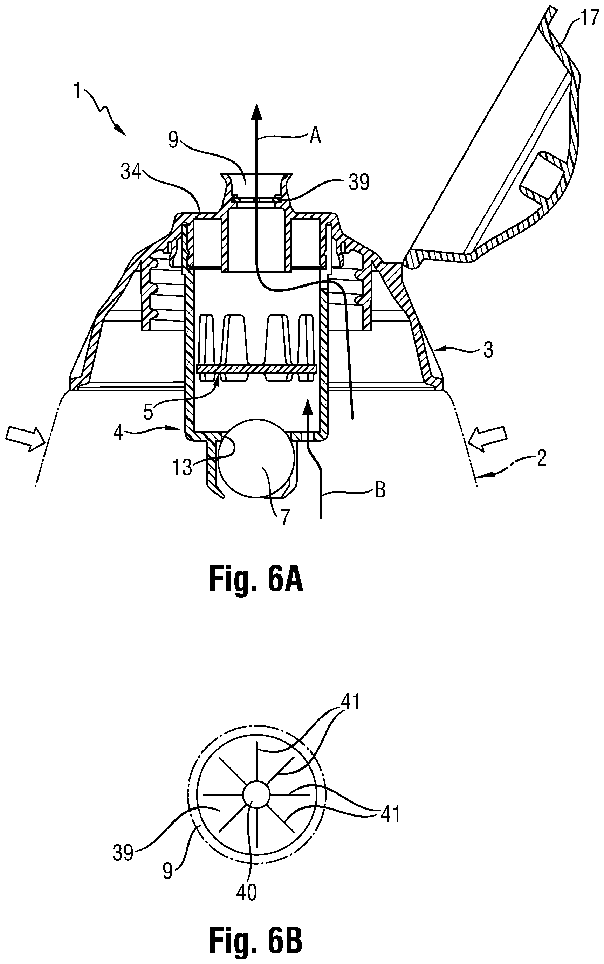

Fig. 6A is a cross-section taken along the line A-A of Fig. 1A of the dosing apparatus according to one embodiment of the present invention, wherein the flow restricting orifice (9) comprises a resiliently deformable valve member (39) having at least one slit (41), the resiliently deformable valve member (39) further comprising a valve aperture defined by an aperture perimeter (40). The aperture perimeter (40) is coincident with 4 slits (41). The resiliently deformable valve member (39) remains undeformed, providing the smallest dose volume. The flow path of the liquid into the dosing chamber is illustrated.
Fig. 6B illustrates the flow restricting orifice (9) of Fig. 6A, when viewed from above.
Fig. 7A is the embodiment of Fig. 6A, in which the resiliently deformable valve member (39) is deformed, such that valve aperture is increased to provide the largest dose volume. The flow path of the liquid into the dosing chamber is illustrated.
Fig. 7B illustrates the flow restricting orifice (9) of Fig. 7A, when viewed from above.

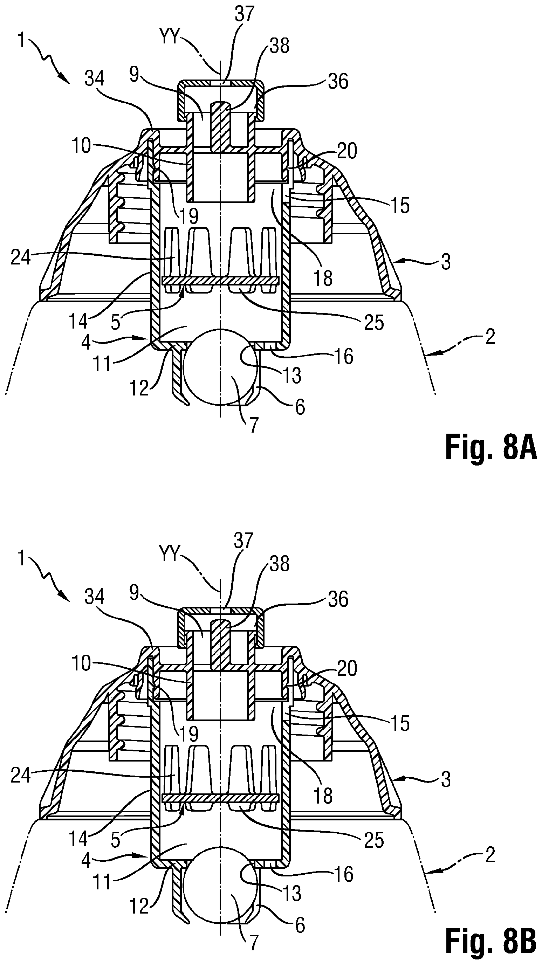

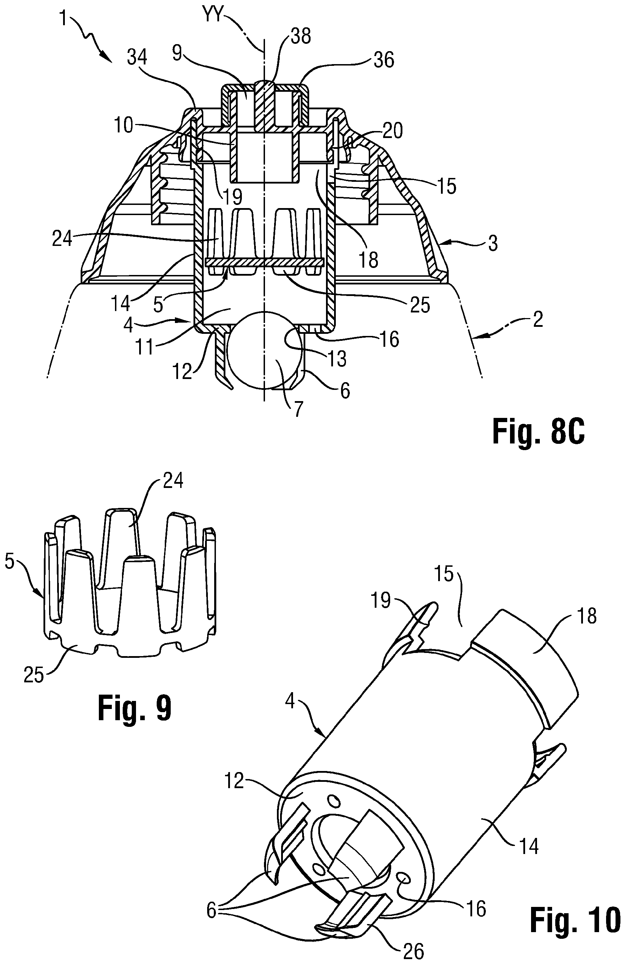

Fig. 8A is a cross-section taken along the line A-A of Fig. 1A of the dosing apparatus according to one embodiment not part of the present invention, wherein the flow restricting orifice (9) comprises an orifice (34) and an at least partially removable cover (35) which slides vertically in order to alter the exposed cross-sectional area of the at least one flow restricting orifice (9). In such embodiments not part of the invention, the exposed cross-sectional area of the at least one flow restricting orifice (9) is measured as the open cylinder, bound by the perimeter of the sealing lip (37) in the at least partially removable cover (35), having a height measured to the top of the plug (38) of the flow restricting orifice (9). In Fig. 8A, the at least partially removable cover (35) is positioned to fully open the at least one flow restricting orifice (9).
Fig. 8B is the embodiment not part of the invention of Fig. 8A, in which the at least partially removable cover (35) is positioned to partially open the at least one flow restricting orifice (9).
Fig. 8C is the embodiment not part of the invention of Fig. 8A, in which the at least partially removable cover (35) is positioned to fully close the at least one flow restricting orifice (9).
Fig. 9 is an isometric view of a piston of the dosing apparatus according to a preferred embodiment of the present invention.
Fig. 10 is an isometric view of a dosing chamber of the dosing apparatus according to a preferred embodiment of the present invention.
Fig. 11 is a cross-section taken along the line A-A of Fig. 1A of the dosing apparatus according to one embodiment of the present invention.
Fig. 12A is an axial cross-section of another embodiment of the dosing apparatus.
Fig. 12B is an exploded view of a dosing chamber and valve of the dosing apparatus according to the embodiment illustrated in Fig. 12A.
Fig. 13 is an axial cross-section of another embodiment of the dosing apparatus.
Fig. 14A to 14C are axial cross-sections of an embodiment of the present invention illustrating the positioning of the piston and valve in the various phases of dispensing.

### DETAILED DESCRIPTION OF THE INVENTION

By the terms "a" and "an" when describing a particular element, we herein mean "at least one" of that particular element.

The term "dose" as used herein is defined as the measured amount of liquid to be delivered by the apparatus. The dose begins when the liquid first exits the nozzle and ends once the flow of said liquid stops. The volume of liquid dosed for each squeeze of the container is typically from 1ml to 80ml, preferably from 3ml to 40ml, more preferably 10ml to 30ml, and even more preferably 15ml to 30ml.

By "substantially independently from pressure" as used herein it is meant that pressure causes less than 10% variation from the target measured dose.

By "substantially constant liquid output or dosage" as used herein it is meant that variation from the target measured dose is less than 10%.

By "resiliently squeezable" as used herein it is meant that the container returns to its original shape without suffering any permanent deformation once pressure is released therefrom.

By "shear thinning" as used herein it is meant that the liquid referred to is non-Newtonian and preferably has a viscosity that changes with changes in shear rate.

By "ergonomic(s)" as used herein it is meant that the feature(s) is designed to maximize productivity by reducing operator (or user) fatigue and discomfort.

By "drip-free" as used herein it is meant that no visible residue is left proximal to the nozzle of the cap following dosing and/or that no liquid exits the resilient container when the apparatus is held top down without squeezing.

Various embodiments will now be described to provide an overall understanding of the principles of the structure, function, manufacture, and use of the apparatus and methods disclosed herein. One or more examples of these embodiments are illustrated in the accompanying drawings. Those of ordinary skill in the art will understand that features described or illustrated in connection with one example embodiment can be combined with the features of other example embodiments without generalization from the present disclosure.

A preferred field of use is that of dosage devices for domestic or household use, containing detergents such as hard surface cleaning compositions, liquid laundry detergent compositions or other cleaning preparations, fabric conditioners and the like. Other fields of use include dosage devices for manual and automatic dishwashing liquids, hair-care products and oral care applications such as mouth washes, beverages (such as syrups, shots of liquors, alcohols, liquid coffee concentrates and the like), food applications (such as food pastes and liquid food ingredients), pesticides, and the like.

The resiliently squeezable container (2) can comprise a liquid therein, preferably a detergent composition. The liquid can be Newtonian or shear thinning. The viscosity of the liquid can be from 1 to 350mPa•s, preferably from 1 to 300mPa•s, more preferably from 1 to 250 mPa•s, even more preferably from 1 to 220 mPa•s, even more preferably 1 to 200mPa•s and most preferably from 1 to 150mPa•s (measured at 1000s⁻¹ at 20°C).

The invention is directed to an apparatus (1) for repeatedly dosing a quantity of liquid, in which the quantity of liquid dosed can be easily adjusted to suit the user's requirement. The apparatus (1) comprises a resiliently squeezable container (2), preferably a detergent composition, a cap (3) operably connected to the container, a dosing chamber (4) operably connected to said cap (3), a plunger provided in said dosing chamber (4), a valve retaining means (6), and a valve (7). The apparatus (1) may have a longitudinal axis (YY) extending along/or substantially parallel to, the centerline of the apparatus (1). Said longitudinal axis (YY) may also be parallel to the direction of a portion of the fluid flow during dispensing.

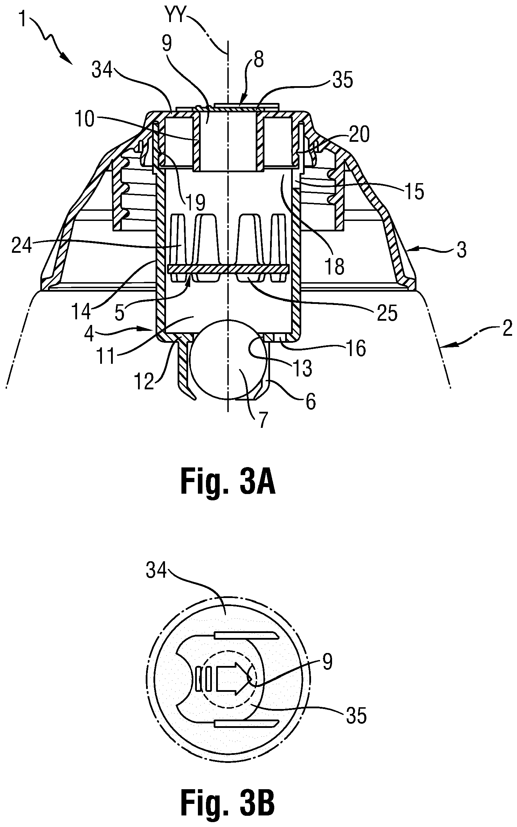

The cap (3) comprises a nozzle (8) for expelling the liquid out of the container (2). The nozzle (8) comprises at least one flow restricting orifice (9), such that the exposed cross-sectional area of the at least one flow restricting orifice (9) can be altered, in order to alter the dose, as exemplified in Fig. 3A and 3B, 4A and 4B, 5A and 5B for embodiments not part of the invention, and in 6A and 6B, and 7A and 7B for embodiments according the present invention. By altering the at least one flow restricting orifice (9), the volume of liquid expelled from the container (2) before the piston blocks the nozzle, is altered.

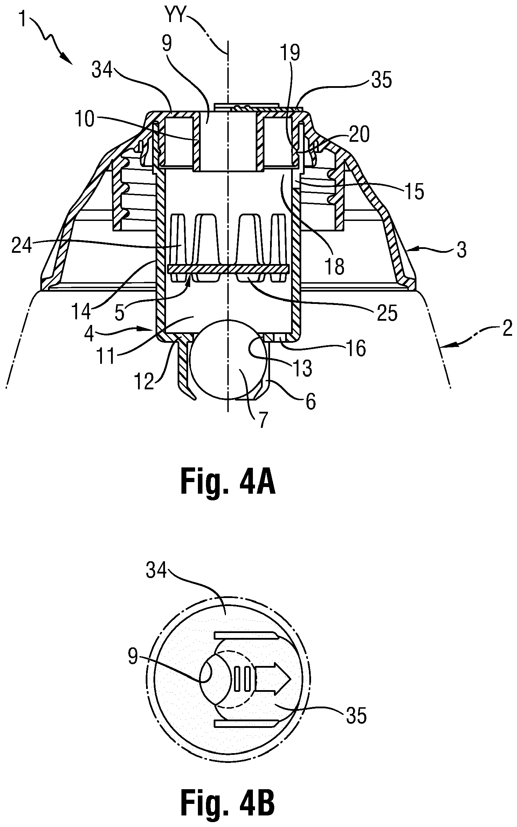

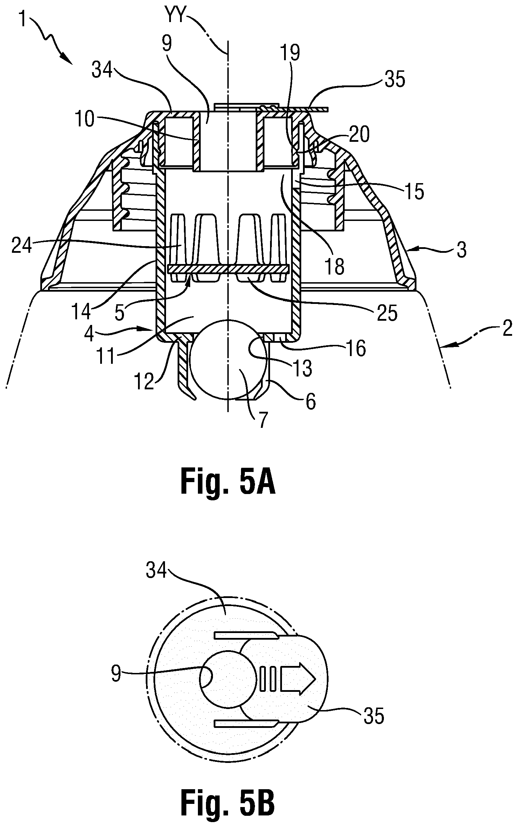

Referring to Fig. 3A to 5B, the cap (3) comprises a nozzle (8) extending substantially parallel to the longitudinal axis (YY) comprising and/or defining at least one flow restricting orifice (9) at its apex, and an entry tube (10) which extends downwardly and opposite said orifice (9). Said orifice (9) may comprise an at least partially removable cover (35). The position of the at least partially removable cover (35) can be altered in order to alter the exposed cross-sectional area of the at least one flow restricting orifice (9). When the least partially removable cover (35) is positioned such that the exposed cross-sectional area of the at least one flow restricting orifice (9) is at its most open, the liquid flow through the inlet opening (15) and at least one flow restricting orifice (9) is at a maximum before the piston closes off the entry tube (10) (see Fig. 5A and 5B. As the at least partially removable cover (35) is moved, such that the exposed cross-sectional area of the at least one flow restricting orifice (9) is reduced, the liquid flow through the inlet opening (15) and at least one flow restricting orifice (9), before the piston closes off the entry tube (10), is reduced (see Fig. 4A and 4B). When the least partially removable cover (35) is positioned such that the at least one flow restricting orifice (9) is closed off, the dose delivered by the apparatus is reduced to zero, as exemplified in Fig. 3A and 3B.

The at least partially removable cover (35) can be moved incrementally, having two or more discrete positions. This can be achieved by providing a protrusion and two or more corresponding grooves in the sliding mechanism of the at least partially removable cover (35), or vice-versa.

The at least one flow restricting orifice (9) comprises a resiliently deformable valve member (39) having at least one slit (41), the resiliently deformable valve member (39) further comprising a valve aperture, wherein the valve aperture is defined by an aperture perimeter (40), wherein the aperture perimeter (40) is coincident with at least one slit (41). Preferably, the aperture perimeter (40) is coincident with all of the slits (41). The resiliently deformable valve member (39) can comprise 2 or more slits (41), preferably 3 or more slits (41), and more preferably 4 slits (41) (see Fig. 6A and 6B).

The valve aperture can be positioned at the center of the resiliently deformable valve member (39). The valve aperture can be round, triangular, oval, or square, though round is preferred.

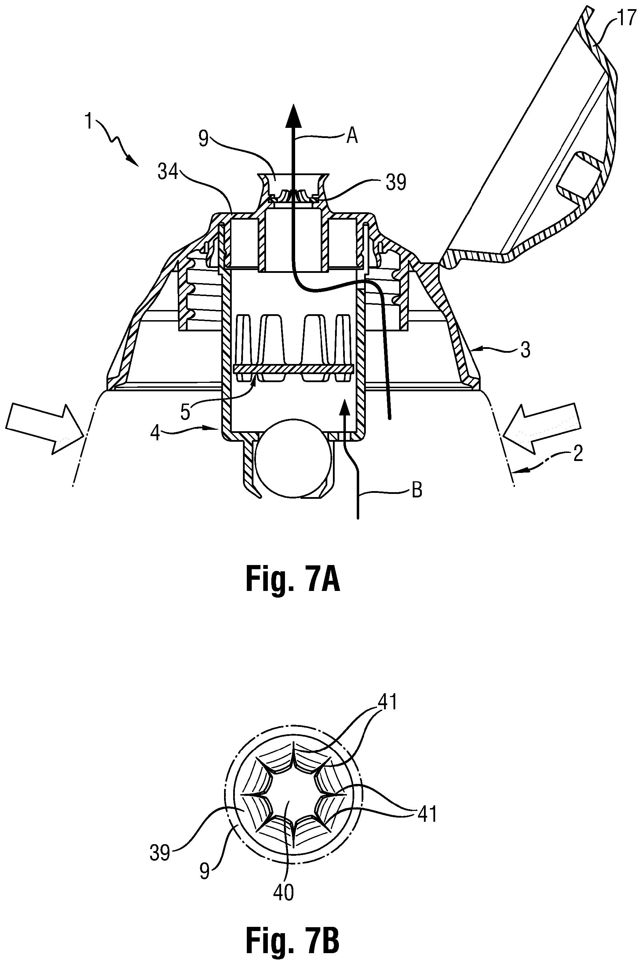

The dose delivered by the dosing apparatus (1) can be adjusted by altering the pressure applied to the container (2) during squeezing. The valve aperture is a minimum when the container is lightly squeezed and the resiliently deformable valve member (39) remains undeformed (see for example, Fig. 6A and 6B). As such, a small dose is delivered upon light squeezing of the container (2). When greater pressure is applied to the container (2), the resiliently deformable valve member (39) deforms along the at least one slit (41), such that the valve aperture is increased (see for example, Fig. 7A and 7B). As such, a larger dose is delivered by applying greater pressure during squeezing of the container (2).

The squeezing pressure required in order to provide a larger dose can be modified by the means known to the skilled person. For instance, the squeeze pressure required in order to provide a larger dose can be reduced by selecting a more flexible material for the resiliently deformable valve member (39), by increasing the diameter of the resiliently deformable valve member (39), by reducing the thickness of the resiliently deformable valve member (39), by increasing the number of slits (41), and combinations thereof.

In a preferred embodiment, the dosing apparatus delivers a smaller dose of liquid at a pressure of less than 5.0 kPa, preferably less than 4.0 kPa, preferably less than or equal to 2.0 kPa, measured according to the test method described herein. At higher pressures, the resiliently deformable valve member (39) deforms to deliver higher doses.

The resiliently deformable valve member (39) can be formed from a material having a Shore A hardness of from 1 to 100, preferably 10 to 90, more preferably 20 to 80, even more preferably 30 to 70, as measured using DIN53505. The valve member can also have a varying durometer throughout its section and or varying cross-section thickness to achieve the same varying flexibility of the resiliently deformable valve member (39).

The resiliently deformable valve member (39) can be formed from any suitable material, such as a material selected from the group consisting of: silicone rubber, natural or synthetic rubber, thermoplastic elastomers like TPE, TPV, TPU or blends thereof, thermoplastic copolyesters, thermoplastic polyamides, thermoplastic copolyester, styrenic block copolymers, neoprene, or polyolefin blends, and mixtures thereof.

Said resiliently deformable valve member (39) can also be used in a dosing apparatus for dosing liquid at two or more flow rates. For instance, a low flow-rate for spot treating a surface or fabric when squeezing the container with a low pressure, and a high flow-rate for bulk washing when squeezing the container at a higher pressure. Typically, such a dosing apparatus (1) for dispensing a liquid comprises a resiliently squeezable container (2), a cap (3) operably connected to said container (2), said cap (3) comprising a nozzle (8) for expelling liquid out of the container (2); wherein the nozzle comprises the resiliently deformable valve member (39). The resiliently deformable valve member (39) further comprises a valve aperture, wherein the valve aperture is defined by an aperture perimeter (40), wherein the aperture perimeter (40) is coincident with at least one slit (41).

The flow restricting orifice (9) can be in the form of a "push-pull" closure in an embodiment not part of the invention, as exemplified in Fig. 8A to 8C. Such "push-pull" closures comprise sleeve portion (36) with a sealing lip (37), the sealing lip (37) defining an opening. The sleeve portion is mounted on a tubular shaft. The tubular shaft can be part of the entry tube (10) or nozzle (8). Such flow restricting orifice (9) comprise a plug (38). When the sleeve portion (36) is pressed down to its lowest position, the plug (38) typically seals the opening defined by the sealing lip (37), closing the flow restricting orifice (9). When the sleeve portion (36) is lifted to its highest position, the exposed cross-sectional area of the at least one flow restricting orifice (9) is opened to its maximum size. For such push-pull type flow restricting apertures, the exposed cross-sectional area of the at least one flow restricting orifice (9) is defined as the area defined by the perimeter of the sealing lip (37) multiplied by the distance between the sealing lip and the top of the plug (38).

The dosing apparatus (1) can dispense a volume from the smallest dose setting which is from 5% to 66%, preferably from 10% to 50%, more preferably from 15% to 30% of the volume dispensed from the largest dose setting.

For certain applications, such as dispensing liquid hard surface cleaning compositions, the "high" dose can be from 10 ml to 100 ml, preferably from 15 ml to 50 ml, more preferably from 20 ml to 30 ml. In contrast, the "low" dose can be from 0.1 ml to 5.0 ml, preferably from 0.2 ml to 2.5 ml, more preferably from 0.3 ml to 1.0 ml. For instance, it is desirable to dispense a large dose of liquid hard surface cleaning composition for dilution into a bucket of water, for example, for mopping of floors. In contrast, a smaller dose is desired for direct application on to a stain on a hard surface, before scrubbing.

For other applications, such as dispensing liquid laundry detergent compositions, the "high" dose can be from 20 ml to 150 ml, preferably from 25 ml to 120 ml, more preferably from 30 ml to 90 ml. In contrast, the "low" dose can be from 1 ml to 17.5 ml, preferably from 2.5 ml to 15 ml, more preferably from 5.0 ml to 10 ml. For instance, it is desirable to dispense a "high" dose of liquid laundry detergent composition into a washing machine, while a "low" dose is desired for direct application on to a fabric stain during pretreating.

The entry tube (10) may extend vertically downwardly substantially parallel to the longitudinal axis (YY) so as to at least partly enter a volume formed by the dosing chamber (4). The cap (3) may further comprise a top lid (17) capable of engaging with the nozzle (8) to provide a closing and sealing means. The top lid (17) may be pivotable upon a pivot point (18) located on a surface of the cap (3). The person skilled in the art would understand that other closing features or cap constructions could also be used, such as twist, pull, push, screw or other caps know in the art.

The dosing chamber (4) comprises a base (12) having a discharge opening (13) located therein. Preferably, the discharge opening (13) is located at the centre of the base (12) to allow the liquid accumulated in the volume (11) of the dosing chamber (4) below the plunger to be quickly flushed back into the container (2) after squeezing. At least one aperture (16) is located proximal to the discharge opening (13). The dosing chamber (4) also has sidewalls (14) extending upwardly along the perimeter of the base (12) and have at least one inlet opening (15) located proximal to said sidewalls (14). Preferably, the inlet openings (15) are located proximal to the apex of the sidewalls (14) opposite the base (12) of the dosing chamber (4). The base (12) of the dosing chamber (4) may be chamfered to form an inclined surface extending from the sidewalls (14) to the discharge opening (13). Preferably, said inclined surface extends substantially linearly from said sidewalls (14) to said discharge opening (13). Such configuration allows the liquid to drain from the dosing chamber (4) in an effective manner without leaving any left-behind residue, particularly in locations proximal to the sidewalls (14), which would otherwise cause jamming of the plunger upon drying.

The ratio of the total surface of inlet openings (15) and the apertures (16) can be between 2 to 25, preferably from 2 to 24, preferably from 2 to 23, preferably from 4 to 22, preferably from 6 to 22, more preferably from 8 to 20, most preferably 10 to 18.

The plunger is preferably in the form of a piston (5) and is moveable relative to the dosing chamber (4) so as to advance upon squeezing of the inverted container (2). The piston (5) moves from a starting position - wherein the piston (5) is at its furthest position from the entry tube (10), up to a blocking position - wherein at least part of the piston (5) contacts the entry tube (10) so as to close it and terminating the dose. Preferably the motion of the piston (5) is linear and parallel to the longitudinal axis (YY), however, it is understood that any other kind of motion such as rotation and combination of rotation and translation may be equally suitable for generating a dose.

The valve retaining means (6) is located below the base (12) of the dosing chamber (4) and may extend vertically downward from said base (12) in a direction substantially parallel to the longitudinal axis (YY). Preferably, the valve retaining means (6) is one part with the dosing chamber (4). This allows to reduce the number of parts required and contributes towards introducing benefits such as reduced manufacturing complexity and cost, and ease of assembly.

The valve (7) is preferably uni-directional (i.e. it opens and closes in one direction only) and is provided in the retaining means (6). The valve (7) is moveable from an open position - allowing liquid to flow through the discharge opening (13), and a closed position - wherein the valve blocks said discharge opening (13).

In a preferred embodiment, said valve (7) may be spherical in shape and may be capable of blocking the discharge opening (13) by at least partly entering the dosing chamber (4). Preferably, said valve may be capable of contacting and/or impacting and/or abutting at least part of the piston (5) when said piston (5) is in its starting position and said valve (7) is in its closed position upon squeezing of the resilient container (2). Such configuration allows easy and accurate location of the valve into the discharge opening upon squeezing of the container (2) with no need for a specific orientation to be maintained. Another advantage is that by allowing the valve (7) to at least partly enter the dosing chamber (4) and impact and/or abut at least part of the piston (5), said valve (7) acts as a precursor and pushes up the piston so as to overcome any initial jamming of said piston (5).

In a preferred embodiment, as illustrated in Fig. 9, the piston (5) may have a substantially flat surface, preferably a flat surface, and may comprise stabilizing wings (24) extending upwardly and substantially parallel to the longitudinal axis (YY). Preferably, the root of said stabilizing wings (24) may be located along the circumference of said piston (5). Said stabilizing wings may be spaced apart so as to minimize material used and any friction with the sidewalls (14) of the dosing chamber (4). The diameter of said piston (5) may be smaller than the diameter of said dosing chamber (4) to further reduce any friction effects between the surfaces thereof. Preferably, said piston (5) may further comprise protrusions (25) extending opposite and mirrored to said stabilizing wings (24) wherein said protrusions (25) are of smaller length than said stabilizing wings (24). Without being bound by theory, it is believed that an advantage of the flat configuration of the piston is that the pressure differential is minimized between the liquid flowing through the inlet openings (15) and the liquid flowing through the apertures (16), thus rendering the rate of climb of the piston (5) and consequently the dosage, dependant primarily on the ratio of the surface of the openings and the viscosity of the liquid. A further advantage is introduced by the protrusions (25), which reduce contact with the base (12) of the dosing chamber (4), thus minimizing jamming of the piston (5).

Referring to Fig. 6A and 7A, when a force is applied to the inverted container (2), said container (2) experiences buckling and concurrently generates a pressure within said container (2) which causes the valve (7) to close the discharge opening (13). The liquid is consequently forced to flow into the dosing chamber (4) via the apertures (16) and the inlet openings (15). The Aflow path of the liquid is shown by arrows A and B of Fig. 7A and 4B. The part of the liquid that flows through the apertures (16) pushes the piston (5) towards the entry tube (10), whilst the part of the liquid that flows through the inlet openings (15) is directly expelled from the container (5) through the entry tube (10) and out of the nozzle (8). Once the piston reaches the entry tube (10) liquid flow is stopped and the dose complete. Releasing the force from the inverted container (2) causes the resilient spring-back of the container surfaces and allows the vacuum, formed during squeezing and buckling of the container (2), to open the valve (7) and effectively drain the dosing chamber (4) while the piston returns to its starting position. At the same time the volume above the piston fills with air which is pulled in via the nozzle(8), venting the container (2) to bring the deformed container (2) back to its starting form. At this point a new dose may be dispensed by simply squeezing again said container (2) without needing to rotate the apparatus (1) back to the upright position.

Referring to Fig. 6A to 7B, and Fig. 10, in a preferred embodiment of the present invention the dosing chamber (4) may comprise sidewalls (14) extending vertically upwardly along the perimeter of base (12) and parallel to the longitudinal axis (YY), and at least two tabs (18) extending vertically upwardly from the apex of said sidewalls (14) in a direction opposite to said base (12). The tabs (18) may be spaced apart so as to form a castellation on the upper portion of the dosing chamber (4). Such tabs (18) may define inlet openings (15) formed by the open space between said tabs (18). Preferably, the perimeter of said base (12) may be substantially circular, however it is understood by the person skilled in the art that other shapes may also be suitable such as oval, squared, triangular and so on. This configuration allows for ease of manufacture of the inlet openings (15). More preferably, the dosing chamber comprises multiple tabs (18) forming multiple inlet openings (15).

In one embodiment the tabs (18) may further comprise a notch (19) which may follow the contour of the inside face of said tabs (18) and extend a predetermined length towards the longitudinal axis (YY), for compliance with a groove (20) located on a surface of the cap (3). Preferably, said surface of cap (3) faces opposite to said longitudinal axis (YY) and is located on a first skirt (21). Said first skirt (21) may extend downwardly and substantially parallel to said longitudinal axis (YY) from a first surface of the cap (3). The dosing chamber (4) may be connected to the cap (2) by snap fitting said tabs (18) to said first skirt (21). Such a construction allows for ease of assembly.

In a preferred embodiment the apertures (16) may be located in the base (12) of the dosing chamber (4). Preferably, said apertures (16) may be proximal to the discharge opening (13) and the centre line of said apertures (16) may be parallel to the centre line of said discharge opening (13). An advantage of such configuration is that laminar flow is maintained which serves to apply a constant and balanced force on the piston. Without wishing to be bound by theory, it is believed that turbulent flow may destabilize the smooth movement of the piston.

In a particularly preferred embodiment (not shown), the apertures (16) may be in the form of multiple slots extending for a predetermined length from the discharge opening (13) towards the sidewalls (14) through the base (12) of the dosing chamber (4). In this particular embodiment, the piston (5) comprises a ring-like protrusion extending from the base thereof in a direction substantially parallel to the longitudinal axis (YY) towards said base (12). The said ring-like protrusion may be capable of closing the multiple slots and the discharge opening (13) when in its starting position by being in relative contact with the corresponding surface of said base (12) of said dosing chamber (4). An advantage of this configuration is that bubbling through the apertures is significantly reduced and even prevented when the filled container is inverted without squeezing it. Without wishing to be bound by theory, it is believed that when holding the apparatus (1) in its inverted position, particularly when at an angle or when the liquid in the container has been partly depleted, air may flow through the timer holes causing a back pressure differential that results in some of the liquid to flow in the dosing chamber (4) through the inlet openings (15) and leak. Consistent dosing is therefore improved over different tilt angles and also at different container fill levels.

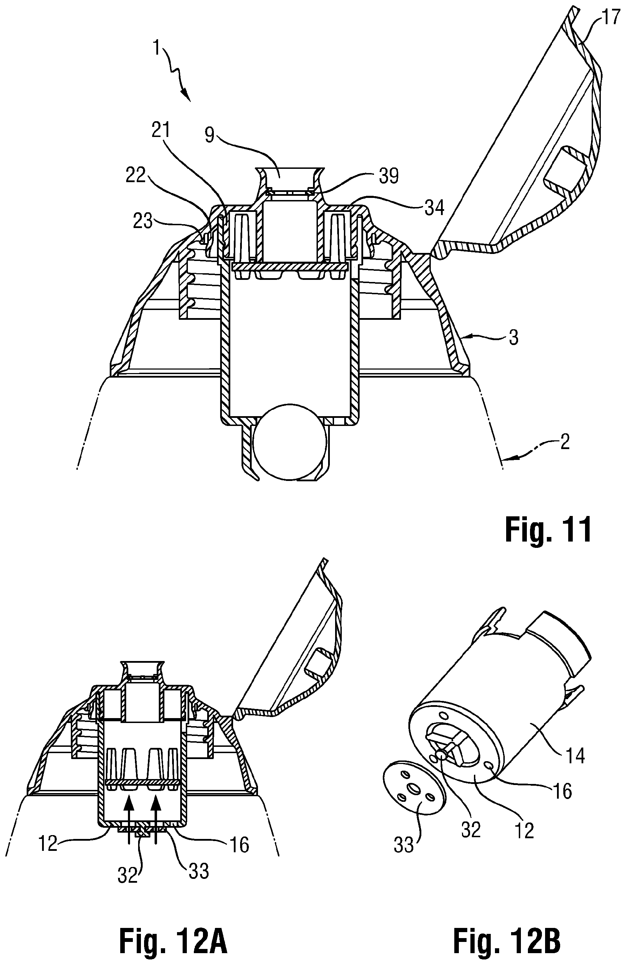

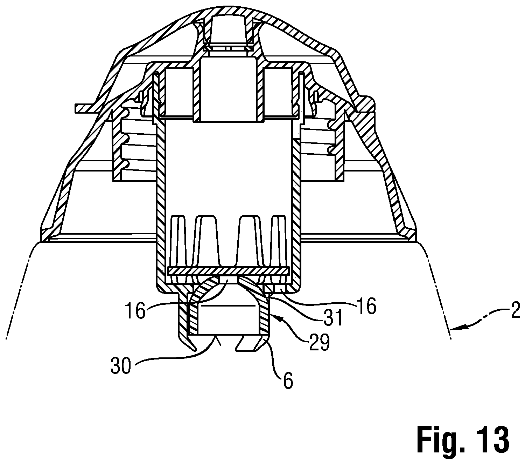

In further embodiments the apertures (16) may be located in and/or through the valve (29, 33), as illustrated in Fig. 12A-12B and Fig. 13.

In a preferred embodiment, the base (12) of the dosing chamber (4) may be chamfered in such a way to define a first area and a second area. Preferably, said first area may be demarcated by the sidewalls (14) of the dosing chamber (4), and said second area may define the circumference of the discharge opening (13). More preferably, the said second area is located below said first area and the centerline of said first area coincides with the centerline of said second area.

Referring to Fig. 11, in an embodiment of the present invention, the cap (3) may comprise a second skirt forming a plug seal (22) extending downwardly proximal to the first skirt (21), and a v-shaped notch (23) proximal to said second skirt (22). The plug-seal (22) and the V-shaped notch (23) may be capable of at least partly engaging with the uppermost surface of the container (2) so as to provide a secure sealing means and prevent leakage during dosage. An advantage of such a configuration is the reduction in the number of parts, since an additional sealing means such as an O-ring or the like is no longer required.

In an embodiment (not shown) of the present invention, the first skirt (21) may comprise shutter tabs in the form of spaced flanges or the like to at least partly cover at least one of the inlet openings (15). Alternatively, the first skirt (21) may have shutter tabs formed by portions of the first skirt (21) subtending at a variable vertical distance taken from a plane substantially parallel to the longitudinal axis (YY) to form a series of preferably linear gradients along the entire circumference of said first skirt (21). In this embodiment the first skirt (21) may be rotatable with respect to the dosage chamber (4) so as to allow variation in the size of the inlet openings (15). This allows greater flexibility in dosage whereby the user can dispense different amounts of liquid by rotating the cap (3) which in turn changes the size of said inlet openings and thus the ratio of the surface of said inlet openings (15) and the apertures (16).

In a preferred embodiment of the present invention, as illustrated in Fig. 10, the valve retaining means (6) may be formed by at least three flexible hook-shaped protrusions (26) extending downwardly from said base (12) in a direction opposite to the sidewalls (14) of the dosing chamber (4) and substantially parallel to the longitudinal axis (YY). An advantage of such hook shaped protrusions (26) is the simplification of the de-molding operation during manufacturing by allowing pull-off from the injection mold without complex slides in the mold. A further advantage is that said hook shaped protrusions (26) allow to assemble the valve (7) easily via push-fit, while minimizing contact between said valve (7) and said hook shaped protrusions (26) which aids in preventing blockage.

In a further embodiment the retaining means (6) may further comprise at least one flat panel extending downwardly from said base (12) and substantially parallel to the longitudinal axis (YY). Said panels are preferably located in the gaps formed between the hook-shaped protrusions (26).

This configuration allows to securely locate the valve (7) inside the retaining means (6) in a child-proof manner by preventing the removal of the valve (7) once inserted.

In a preferred embodiment (not shown) the valve retaining means (6) may be formed by at least two overhangs, preferably at least three overhangs, extending downwardly from said base (12) in a direction opposite to the sidewalls (14) of the dosing chamber (4) and substantially parallel to the longitudinal axis (YY). In this embodiment, a snap ring may join to the apex of said overhangs so as to define a valve insertion opening at the centre thereof. The snap ring may extend towards the centre of the valve insertion opening, and may be inclined at an angle from a plane perpendicular to said longitudinal axis (YY). Preferably, said angle is about 35° prior to the insertion of the valve through the valve insertion opening and deforms in a direction towards said base (12) when the valve is pushed through the valve insertion opening. The resulting angle of said snap ring after valve insertion is preferably -45° taken along said plane perpendicular to said longitudinal axis (YY). Preferably, said overhangs and said snap ring are one part with said dosing chamber (4). An advantage of this configuration is that potential entanglement of dosing chambers during the manufacturing procedure is avoided.

In another embodiment of the present invention, illustrated in Fig. 12A and Fig. 12B, the valve retaining means (6) may be formed by a projection (32) extending from said base (12) in a direction opposite to said sidewalls (14) and may engage with a flexible one-way disc valve (33) with a very low cracking pressure (i.e. low minimum upstream pressure at which the valve will operate). The valve (33) may be engaged to said valve retaining means (6) via a central snap fit or other means which allows movement of said valve (33) relative to said projection (32). The valve (33) may be substantially flat and circular in shape, although it is understood that other shapes may also be suitable such as dome shaped and/or umbrella shaped. The valve (33) may have apertures (16) extending therein. An advantage of such configuration is that the total size of the dosing chamber may be reduced together with reduced complexity in view of the simple central snap fit.

In an embodiment of the present invention, illustrated in Fig. 13, the valve (29) may be bullet shaped. Said bullet shape is defined by a substantially flat surface (30) on one end and a substantially convex surface (31) on the opposite end. The valve (29) may be inserted into the valve retaining means (6) via a snap fit or other means which allows movement of said valve (29) relative to said valve retaining means, the valve retaining means (6) guiding the valve (29) and preventing it from changing orientation. The flat surface of said valve may have an opening subtending more than 50% of the diameter of said valve (29) and the convex surface (31) may have one or more apertures (16) located proximal to the apex of said convex surface. The valve (29) may be oriented so that the convex surface (31) faces the discharge opening (13) and the flat surface (30) faces the inside of the container (2). An advantage of such configuration is ease of manufacture of the valve.

Referring to Fig. 1B, in a preferred embodiment the container (2) may comprise a front (27) and a back (28) surface in a facing relationship. Preferably, said front (27) and back (28) surfaces have a larger surface area compared to the other surfaces of the container (2) and are spaced apart so that the distance (d) between said front (27) and back (28) surfaces is between 30mm to 100mm. This specific range has been found to be optimal for allowing the user to correctly and comfortably grip the container and squeeze effectively.

The container (2) may be made of any flexible material, however, preferably said material is selected from the group consisting of PP, PET, PE or blends thereof. Said container (2) may be capable of displacing from 5ml to 150ml, preferably from 10ml to 80ml, of liquid without experiencing permanent deformation. Without being bound by theory it is believed that permanent deformation will create cracks in the container or cause paneling (i.e. the panels do not return to the starting position) which in turn reduce the displacement volume with each use, affecting the consistency of the dosage.

In a preferred embodiment (not shown), the container (2) may comprise an indicating means to indicate to the user the acceptable inclination angle of the apparatus (1) for effective dosage. Indeed, in some operations the user may need to angle the apparatus (1) due to space restrictions or simply comfort. However, tilting the apparatus (1) at too shallow angles may result in loss of accuracy of the dosage, particularly if air starts flowing through the inlet openings (15). This may be particularly true when the liquid is close to depletion. It may therefore be necessary to incline the apparatus (1) as much as possible but in such a way that the liquid still covers said inlet openings (15). An indicating means allowing the user to see when said liquid covers said inlet openings (15) may be desirable. Preferably, said indicating means is a transparent window located on said container (2) proximal to the connecting portion of the cap (3) with said container (2). Alternatively, said indicating means may be an entirely transparent container. A further advantage of such configuration is that the depletion of the liquid may be inspected by the user and the correct functioning of the valve and piston communicated.

An advantage of the present invention is that constant dosage during use (i.e. as the liquid being dispensed is depleted from the container) is achieved whilst providing optimal ergonomics for the end user who can dispense a dose of liquid without experiencing strain during the squeeze operation. Indeed in a preferred embodiment, the dosing apparatus of the present invention consists of an ergonomic dosing apparatus.

In an preferred embodiment, the dosing apparatus delivers a dose of liquid at a pressure of less than 100kPa, preferably less than 50 kPa, preferably less than or equal to 20 kPa, more preferably from 0.01 kPa to 100kPa, even more preferably from 0.1 kPa to 50kPa, most preferably from 0.5 kPa to 20kPa, measured according to the test method described herein. Without wishing to be bound by theory it is believed that higher pressures provide detriment to the ergonomics of the apparatus since the user is otherwise required to exert large forces over an extended squeeze time.

In an embodiment of the present invention, the dosage time is typically less than or equal to 3s, preferably less than or equal to 2s, preferably less than or equal to 1.5s, preferably less than or equal to Is and more preferably less than or equal to 0.75s but greater than 0s, most preferably from 0.4s to 0.75s. Without wishing to be bound by theory it is believed that if the time of squeeze is too high, the user will apply a more variable squeezing force with the greatest force being applied towards the end of the squeeze resulting in the user experiencing an undesired fatigue especially in circumstances where multiple doses are required.

It has been found that the ratio of the total surface of the inlet openings (15) and the orifice (9) may also affect the dose, in particular if the total surface of the orifice is smaller than the total surface of the inlet openings. However, if the orifice (9) is too large, dripping may occur which would require the introduction of additional features to minimize said dripping such as silicone or thermoplastic elastomers (TPE) slit-seal valves and/or cross-shaped cuts in the orifice. Preferably, the ratio of the total surface of said inlet openings (15) and said orifice (9) may be from 4 to 0.25, preferably 1.

The ratio of the inlet openings (15) and the orifice (9) may be selected such that the speed of dosage is less than or equal to 1.5s, preferably less than or equal to Is and more preferably less than or equal to 0.75s, at ratios of total surface of the inlet openings (15): apertures (16) of from 15 to 25, preferably 18 to 25, more preferably 22 to 25.

In a preferred embodiment, the dose of liquid being expelled through the nozzle has a flow rate of greater than 20g/s, preferably greater than 25g/s, preferably greater or equal to 30g/s, more preferably greater or equal to 35g/s, more preferably greater or equal to 38g/s, more preferably greater or equal to 40g/s, even more preferably from 42g/s to 70g/s, even more preferably from 45g/s to 65g/s, most preferably from 50g/s to 60g/s, typically measured for the first 10 squeezes starting from a full container. By "full container" it is herein intended that the resilient container of the apparatus is filled with liquid as much as is normal in the field of detergent bottles, this is typically about 90% of the total inner volume of the container. Without wishing to be bound by theory it is believed that lower flow rates provide detriment to the ergonomic squeeze.

The viscosity and rheology profile of the liquid may impact the accuracy, speed of dosage, and comfort in the squeeze operation. It has been found that liquids having a shear thinning-type rheology profile and viscosity within the below-mentioned ranges ensure an acceptable force to be applied to the resilient container and thus permit an ergonomic squeeze of the container to provide a drip-free dose. In a preferred embodiment the liquids herein have a viscosity of from 1 to 350 mPa•s, preferably 1 to 300 mPa•s, more preferably from 1 to 250 mPa•s, even more preferably 1 to 220 mPa•s, measured at 1000s⁻¹ at 20°C. The above viscosities will deliver a constant dose of liquid whilst permitting such ergonomic squeeze. If the viscosity of the liquid is above the mentioned ranges, an unacceptable amount of force is required to be applied by the user to complete a dose.

The viscosity measurements referred to herein are taken with an AR 1000 from TA instruments with a 2° 1' 5" cone angle spindle of 40mm diameter with truncation of 57 micrometer. By "constant dose" it is herein meant that the variation in dose over multiple squeezes, typically 10 consecutive squeezes starting from a full container, does not exceed ± 3ml, preferably ± 1ml.

It has also been found that particularly shear thinning liquids provide for an optimal ergonomic squeeze of the resilient container thus providing good feel for the user upon dosing, this whilst also minimizing dripping. Without wishing to be bound by theory, it is believed that liquids having a viscosity of greater than 150 (and the below mentioned preferred ranges) at low shear (i.e. 10s⁻¹ at 20°C), in combination with the apparatus according to the present invention, provides a dose of liquid substantially drip-free but also provide the necessary feel and control to the user in the squeeze operation. At the same time, ensuring that the same liquid has a high shear viscosity (i.e. 1000s⁻¹ at 20°C) that is below the corresponding viscosity at low shear, preferably within the above mentioned cited ranges, ensures constant dosage with minimal effort whilst providing controlled squeezing. Therefore in a highly preferred embodiment the apparatus according to the present invention comprises a resilient container comprising a shear thinning liquid therein typically having a viscosity, at a shear rate of 10s⁻¹ at 20°C, of more than 1 time, preferably at least 1.5 times, preferably 2 times, preferably from 2 to 100 times, more preferably from 3 to 50 times, even more preferably from 4 to 20 times, even more preferably from 5 to 15 times, most preferably from 6 to 10 times, greater than the viscosity at a shear rate of 1000s⁻¹ at 20°C.

In a preferred embodiment, the low shear viscosity (i.e. at 10s⁻¹ at 20°C) is greater than 150mPa•s, preferably greater than 200 mPa•s, more preferably greater than 250mPa•s, even more preferably greater than 300 mPa•s. Viscosities below the above ranges result in undesirable dripping which not only provides unsightly residues being formed on the cap proximal to the orifice and messiness but also considerably affects consistency of the dosage.

Compositions suitable for use in the apparatus of the present invention are formulated as liquid compositions, preferably liquid detergent compositions, typically comprising water, preferably in an amount from 10% to 85% by weight of the total composition. Suitable compositions may be acidic or alkaline or both, and may further comprise abrasive cleaning particles, suspending aids, chelating agents, surfactants, radical scavengers, perfumes, surface modifying polymers, solvents, builders, buffers, bactericides, hydrotropes, colorants, stabilizers, bleaches, bleach activators, suds controlling agents like fatty acids, enzymes, soil suspenders, anti dusting agents, dispersants, pigments, thickeners, and/or dyes.

In a highly preferred embodiment the liquid compositions herein consist of a compact liquid. As used herein "compact" means a composition having densities in the range of from 0.5 to 1.5 grams, preferably from 0.8 to 1.3 grams, more preferably from 1 to 1.1 grams, per cubic centimeter, excluding any solid additives but including any bubbles, if present.

When a compact liquid is used, such has a shear thinning rheology profile to enable accurate and constant dispensing. In particular, the compact liquid typically has an undiluted viscosity "Vu" of from 1 to 350 mPa•s, preferably 1 to 300 mPa•s, more preferably from 1 to 250 mPa•s, even more preferably 1 to 220 mPa•s, at high shear (measured at 1000s⁻¹ at 20°C) and of greater than 150mPa•s, preferably greater than 200 mPa•s, more preferably greater than 250mPa•s, even more preferably greater than 300 mPa•s, even more preferably from 300 mPa•s to 15000 mPa•s, even more preferably from 300 mPa•s to 10000 mPa•s, most preferably from 300 mPa•s to 5000 mPa•s at low shear (measured at 10s⁻¹ at 20°C), and a diluted viscosity "Vd" that is less than or equal to 0.8Vu, more preferably less than or equal to 0.5Vu, even more preferably less than or equal to 0.3Vu at the respective shear rate, typically measured at a low shear rate of 10s⁻¹ at 20°C. The water that is used to prepare the aqueous solution for determining the diluted viscosity Vd of a composition is deionized water. The dilution procedure is described below. The advantage of such embodiment is that highly concentrated compositions may be formulated in the apparatus of the present invention whilst still achieving the desired consistency in drip-free dosage. Moreover, a compact liquid composition having the above diluted viscosity "Vd" is important to ensure high dissolution. Without wishing to be bound by theory, a compact liquid composition with high undiluted viscosity "Vu", important to ensure drip-free and constant dosing, will generally dissolve poorly, unless it is so formulated as to have a lower viscosity on dilution, as in the present highly preferred embodiment of the invention.

In a preferred embodiment, the liquid contained in the container consists of a liquid detergent composition comprising a rheology modifier comprising, preferably consisting of, polyacrylate based polymers, preferably hydrophobically modified polyacrylate polymers; hydroxyl ethyl cellulose, preferably hydrophobically modified hydroxyl ethyl cellulose, xanthan gum, hydrogenated castor oil (HCO) and mixtures thereof.

Preferred rheology modifiers are polyacrylate based polymers, preferably hydrophobically modified polyacrylate polymers. Preferably a water soluble copolymer based on main monomers acrylic acid, acrylic acid esters, vinyl acetate, methacrylic acid, acrylonitrile and mixtures thereof, more preferably copolymer is based on methacrylic acid and acrylic acid esters having appearance of milky, low viscous dispersion. Most preferred hydrologically modified polyacrylate polymer is Rheovis® AT 120, which is commercially available from BASF.

Other suitable rheology modifiers are hydroxethylcelluloses (HM-HEC) preferably hydrophobically modified hydroxyethylcellulose.

Suitable hydroxethylcelluloses (HM-HEC) are commercially available from Aqualon/Hercules under the product name Polysurf 76® and W301 from 3V Sigma.

Xanthan gum is one suitable rheology modifier for liquids used herein. Xanthan gum is produced by fermentation of glucose or sucroce by *the xanthomonas campestris* bacterium. Suitable Xanthan gum is commercially available under trade anem Kelzan T® from CP Kelco.

Hydrogenated castor oil is one suitable rheology modifier used herein. Suitable hydrogenated castor oil is available under trade name TIXCIN R from Elementis.

The most preferred rheology modifier used herein is hydrologically modified polyacrylate polymer Rheovis® AT 120, which is commercially available from BASF.

Typically, the thickened liquid hard surface cleaning composition herein comprises from 0.1% to 10.0% by weight of the total composition of said thickener, preferably from 0.2% to 5.0%, more preferably from 0.2% to 2.5% and most preferably from 0.2% to 2.0%.

### Method of use

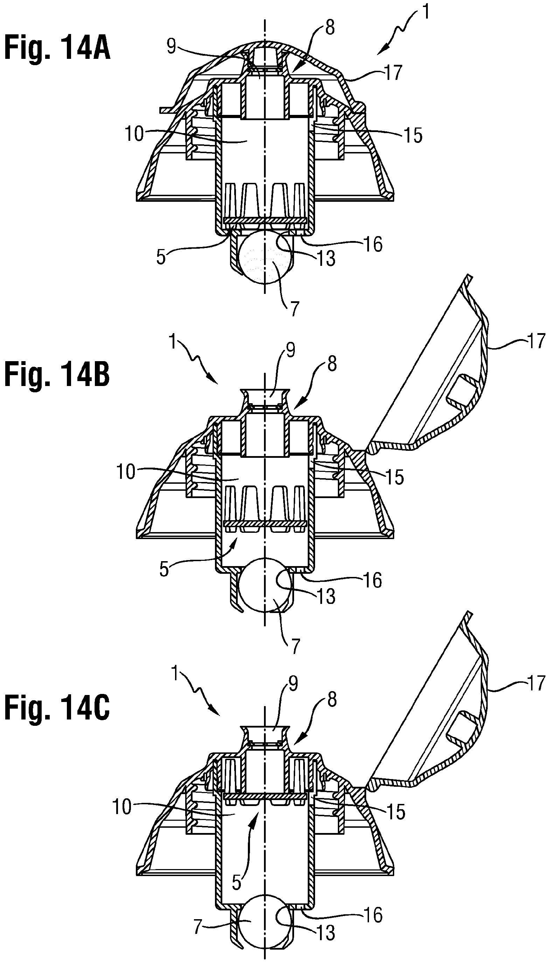

Fig. 14A-14C illustrate an example of the operation of apparatus (1). Fig. 14A illustrates the resting position of apparatus (1), prior to use. The user disengages the top lid (17) or opens the orifice (9) and inclines the apparatus (1) top down, in a substantially inverted position. The user then squeezes the container (2) preferably with one hand to begin the dosage. The liquid flow causes the valve (7) to close the discharge opening (13) and the liquid to flow through the apertures (16) causes the piston (5) to move towards the entry tube (10). Concurrently the liquid forced through the inlet openings (15) is discharged through the entry tube (10) and out of the nozzle (8). Fig. 14B shows the apparatus (1) in its dosing arrangement with the piston (5) at its mid position. The user may squeeze said container for no more than 1.5 seconds, preferably no more than one second, to complete the dose. The volume of liquid dosed for each squeeze of the container (2) may be from 1ml to 80ml, preferably from 3ml to 40ml, more preferably 10ml to 30ml, and even more preferably 10ml to 25ml. Fig. 14C illustrates the arrangement of apparatus (1) at the end of the dosage. Once the piston (5) reaches the entry tube (10) so as to close it, the dose is complete and the user may release the force from said container (2).The valve is then opened by the pressure differential generated as the resilient container (2) deforms back to its original shape, and the liquid is discharged into the container (2) through the discharge opening (13) allowing the piston (5) to return to its starting position. The user may now re-squeeze said container (2) to dispense a new dose, without the need of re-inverting the apparatus (1). This process may be repeated for all subsequent dosages as necessary.

Viscosity measurements - The viscosity of liquid compositions herein, including Vu and Vd, is measured using an AR 1000 from TA Instruments with a 2° 1' 5" cone angle spindle of 40mm diameter with truncation of 57 micrometer, shear rate factor of 28.6, and shear stress factor of 0.0597. The software used is the TA Instruments software, version 3.03 or higher. The following settings are used: a pre-shear with a shear rate of 10s⁻¹ for 10 seconds with 1 minute equilibration and a shear rate continuous ramp of from 0.1s⁻¹ till 1200s⁻¹, during 3 minutes with 32 points per decade. All measurements are carried out at room temperature at 20°C.

Dilution of compact liquid composition - The compact liquid composition is diluted with deionized water according to the following protocol. 100g of composition are weighed in a plastic beaker. The beaker is stirred with a mechanical stirrer rotating at low speed 200rpm to avoid entrapment of air into the product. While stirring, 50ml of deionized water are added to the composition. The composition is stirred for 4 minutes, until the composition is fully homogeneous. The composition is allowed to rest for 15 minutes before starting the viscosity measurement. The entire procedure is carried out at room temperature at 20°C.

Pressure measurements - A pressure sensor of the type MSR145 IP67 waterproof mini data logger from MSR Electronics GmbH (frequency of 1/10s, pressure range 0-2000mBar ±2.5mBar) is inserted into a container according to the present invention filled with a liquid according to the present invention. The cap and the remaining components of the apparatus according to the present invention are then fitted to close the container. Repeated doses of liquid are prepared by repeated squeezes of the apparatus in top down vertical orientation, typically 10 consecutive squeezes starting from a full container. The squeezing is carried out by a robot with a two point squeeze and having a Festo sfc-dc-vc-3-e-h2-co control box and Festo hgple-25-40-2.8-dc-vcsc-g85 motor, that is set to compress the container at a speed "v" of 20mm/s and acceleration "a" of 100mm/s², and using the below protocol (typically the relative distance "xt" is 32mm for containers holding 400ml, 33mm for 520ml containers, 27.5mm for 600ml containers and 21mm for 946ml containers). Pressure readings are recorded by the sensor. Such measurements are repeated for apparatuses having a wide range of inlet and aperture ratios and for a range of viscosities.

Determining acceptable squeeze ergonomics - Acceptable squeeze ergonomics is determined via testing a number of apparatuses according to the present invention with an expert panel. Panelists are asked to rate a number of different apparatuses in terms of comfort and easiness of squeeze to generate a complete dose of liquid. Panelists are asked to squeeze apparatuses having different inlet and aperture ratios and different viscosity profiles. The results are recorded.

Flow rate measurements - A pressure sensor of the type MSR145 IP67 waterproof mini data logger from MSR Electronics GmbH (frequency of 1/10s, pressure range 0-2000mBar ±2.5mBar) is inserted into a container according to the present invention filled with a liquid according to the present invention. The cap and the remaining components of the apparatus according to the present invention are then fitted to close the container. Repeated doses of liquid are prepared by repeated squeezes of the apparatus in top down vertical orientation, typically 10 consecutive squeezes starting from a full container. The squeezing is carried out by a robot with a two point squeeze and having a Festo sfc-dc-vc-3-e-h2-co control box and Festo hgple-25-40-2.8-dc-vcsc-g85 motor, that is set to compress the container at a speed "v" of 20mm/s and acceleration "a" of 100mm/s² and using the below protocol (typically the relative distance "xt" is 32mm for containers holding 400ml, 33mm for 520ml containers, 27.5mm for 600ml containers and 21mm for 946ml containers). Pressure readings are recorded by the sensor. Such measurements are repeated for apparatuses having a wide range of inlet and aperture ratios and for a range of viscosities. The weight of each dose and the time to deliver the dose is recorded. The time is recorded with a high speed camera at 300 frames/second. The flow rate for each dose is calculated by dividing the mass of the dose delivered by the time taken to complete the dose.

Protocol for robot squeeze - The apparatus to be tested is mounted upright in the robot arm. The settings for speed and acceleration are adjusted to the above mentioned parameters. The apparatus is turned top down and then squeezed until the dose is complete. The apparatus is turned upright and then the squeeze is released. Pressure, mass and time parameters are recorded as explained above. The process is repeated, typically 10 times for each condition and readings recorded each time.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A dosing apparatus (1) for dispensing a dose of a liquid comprising:
(i) a resiliently squeezable container (2);
(ii) a cap (3) operably connected to said container (2), said cap (3) comprising a nozzle (8) for expelling the liquid out of the container (2);
(iii) a dosing chamber (4) operably connected to said cap (3), wherein said dosing chamber (4) comprises a base (12) having a discharge opening (13) therein and a perimeter, sidewalls (14) extending along the perimeter of said base (12) and at least one inlet opening (15) located proximal said sidewalls (14);
(iv) at least one aperture (16) located proximal to said discharge opening (13);
(v) a plunger, provided in said dosing chamber (4) and moveable relative to said chamber so as to advance upon squeezing of said container (2), towards a blocking position;
(vi) a valve retaining means (6) located below said base (12); and
(vii) a valve (7, 29, 33) provided in said valve retaining means (6) wherein said valve (7, 29, 33) is movable from an open position, allowing liquid flow through said discharge opening (13), and a closed position, where the valve blocks said discharge opening;
**Characterized in that:**
said nozzle (8) comprises at least one flow restricting orifice (9), such that the exposed cross-sectional area of the at least one flow restricting orifice (9) is adjustable to alter the dose,
wherein the flow restricting orifice (9) comprises a resiliently deformable valve member (39) having at least one slit (41), the resiliently deformable valve member (39) further comprising a valve aperture, wherein the valve aperture is defined by an aperture perimeter (40), wherein the aperture perimeter (40) is coincident with the at least one slit (41).

2. The apparatus (1) according to claim 1, wherein the resiliently deformable valve member (39) comprises 2 or more slits (41), preferably 3 or more slits (41), and more preferably 4 slits (41).

3. The apparatus (1) according to any of claims 1 and 2, wherein the valve aperture is positioned at the center of the resiliently deformable valve member (39).

4. The apparatus (1) according to any of claims 1 to 3, wherein the valve aperture is: round, triangular, oval, or square, preferably round.

5. The apparatus (1) according to any of claims 1 to 4, wherein the resiliently deformable valve member (39) is formed from a material having a Shore A hardness of from 1 to 100, preferably 10 to 90, more preferably 20 to 80, most preferably 30 to 70.

6. The apparatus (1) according to any of 1 to 5, wherein the resiliently deformable valve member (39) is formed from a material selected from the group consisting of: silicone rubber, natural or synthetic rubber, thermo-elastic elastomer, neoprene, and mixtures thereof.

## Patentansprüche

1. Dosierungsvorrichtung (1) zum Abgeben einer Flüssigkeitsdosis, umfassend:
(i) einen elastisch zusammendrückbaren Behälter (2);
(ii) eine Kappe (3), die mit dem Behälter (2) in Wirkverbindung steht, wobei die Kappe (3) eine Düse (8) zum Ausstoßen der Flüssigkeit aus dem Behälter (2) umfasst;
(iii) eine Dosierkammer (4), die mit der Kappe (3) in Wirkverbindung steht, wobei die Dosierkammer (4) eine Basis (12) mit einer Auslassöffnung (13) darin und einen Umfang, Seitenwände (14), die sich entlang dem Umfang der Basis (12) erstrecken, und wenigstens eine Einlassöffnung (15), die nahe den Seitenwänden (14) angeordnet ist, umfasst;
(iv) wenigstens eine Öffnung (16), die nahe der Auslassöffnung (13) angeordnet ist;
(v) einen Druckstempel, der in der Dosierkammer (4) vorgesehen ist und relativ zu der Kammer beweglich ist, um sich beim Zusammendrücken des Behälters (2) in Richtung einer Blockierposition vorzuschieben;
(vi) ein Ventilhaltemittel (6), das unter der Basis (12) angeordnet ist; und
(vii) ein Ventil (7, 29, 33), das in dem Ventilhaltemittel (6) vorgesehen ist, wobei das Ventil (7, 29, 33) aus einer offenen Position, in der Flüssigkeit durch die Auslassöffnung (13) fließen kann, und einer geschlossenen Position, in der das Ventil die Auslassöffnung blockiert, beweglich ist;
**dadurch gekennzeichnet, dass:**
die Düse (8) wenigstens eine Durchflussbegrenzungsöffnung (9) umfasst, so dass die freiliegende Querschnittsfläche der wenigstens einen Durchflussbegrenzungsöffnung (9) einstellbar ist, um die Dosis zu ändern,
wobei die Durchflussbegrenzungsöffnung (9) ein elastisch verformbares Ventilelement (39) mit wenigstens einem Schlitz (41) umfasst, wobei das elastisch verformbare Ventilelement (39) ferner eine Ventilöffnung umfasst, wobei die Ventilöffnung durch einen Öffnungsumfang (40) definiert ist, wobei der Öffnungsumfang (40) mit dem wenigstens einen Schlitz (41) zusammenfällt.

2. Vorrichtung (1) nach Anspruch 1, wobei das elastisch verformbare Ventilelement (39) 2 oder mehr Schlitze (41), vorzugsweise 3 oder mehr Schlitze (41) und mehr bevorzugt 4 Schlitze (41) umfasst.

3. Vorrichtung (1) nach einem der Ansprüche 1 und 2, wobei die Ventilöffnung in der Mitte des elastisch verformbaren Ventilelements (39) angeordnet ist.

4. Vorrichtung (1) nach einem der Ansprüche 1 bis 3, wobei die Ventilöffnung rund, dreieckig, oval oder quadratisch, vorzugsweise rund ist.

5. Vorrichtung (1) nach einem der Ansprüche 1 bis 4, wobei das elastisch verformbare Ventilelement (39) aus einem Material mit einer Shore-A-Härte von 1 bis 100, vorzugsweise 10 bis 90, mehr bevorzugt 20 bis 80, am meisten bevorzugt 30 bis 70 gebildet ist.

6. Vorrichtung (1) nach einem der Ansprüche 1 bis 5, wobei das elastisch verformbare Ventilelement (39) aus einem Material gebildet ist, das ausgewählt ist aus der Gruppe bestehend aus: Silikonkautschuk, natürlichem oder Synthesekautschuk, thermoelastischem Elastomer, Neopren und Mischungen davon.

## Revendications

1. Appareil de dosage (1) pour distribuer une dose d'un liquide comprenant :
(i) un récipient (2) compressible élastiquement ;
(ii) une coiffe (3) reliée opérationnellement audit récipient (2), ladite coiffe (3) comprenant une buse (8) pour expulser le liquide à l'extérieur du récipient (2) ;
(iii) une chambre de dosage (4) reliée opérationnellement à ladite coiffe (3), dans lequel ladite chambre de dosage (4) comprend une base (12) ayant une ouverture de décharge (13) en son sein et un périmètre, des parois latérales (14) s'étendant le long du périmètre de ladite base (12) et au moins une ouverture d'entrée (15) située proximale auxdites parois latérales (14) ;
(iv) au moins un orifice (16) situé proximal à ladite ouverture de décharge (13) ;
(v) un piston, fourni dans ladite chambre de dosage (4) et mobile par rapport à ladite chambre de façon à avancer lors d'une compression dudit récipient (2), en direction d'une position de blocage ;
(vi) un moyen de retenue de valve (6) situé en dessous de ladite base (12) ; et
(vii) une valve (7, 29, 33) fournie dans ledit moyen de retenue de valve (6) dans lequel ladite valve (7, 29, 33) est mobile à partir d'une position ouverte, permettant un écoulement de liquide à travers ladite ouverture de décharge (13), et une position fermée, où la valve bouche ladite ouverture de décharge ;
**caractérisé en ce que :**
ladite buse (8) comprend au moins un orifice de limitation d'écoulement (9), de telle sorte que l'aire en coupe transversale exposée de l'au moins un orifice de limitation d'écoulement (9) est ajustable pour modifier la dose,
dans lequel l'orifice de limitation d'écoulement (9) comprend un élément de valve élastiquement déformable (39) ayant au moins une fente (41), l'élément de valve élastiquement déformable (39) comprenant en outre un orifice de valve, dans lequel l'orifice de valve est défini par un périmètre d'orifice (40), dans lequel le périmètre d'orifice (40) coïncide avec l'au moins une fente (41).

2. Appareil (1) selon la revendication 1, dans lequel l'élément de valve élastiquement déformable (39) comprend 2 fentes ou plus (41), de préférence 3 fentes ou plus (41), et plus préférablement 4 fentes (41).

3. Appareil (1) selon l'une quelconque des revendications 1 et 2, dans lequel l'orifice de valve est positionné au centre de l'élément de valve élastiquement déformable (39).

4. Appareil (1) selon l'une quelconque des revendications 1 à 3, dans lequel l'orifice de valve est : rond, triangulaire, ovale ou carré, de préférence rond.

5. Appareil (1) selon l'une quelconque des revendications 1 à 4, dans lequel l'élément de valve élastiquement déformable (39) est formé d'un matériau ayant une dureté Shore A allant de 1 à 100, de préférence 10 à 90, plus préférablement 20 à 80, le plus préférablement 30 à 70.

6. Appareil (1) selon l'un quelconque de 1 à 5, dans lequel l'élément de valve élastiquement déformable (39) est formé à partir d'un matériau choisi dans le groupe constitué de : caoutchouc de silicone, caoutchouc naturel ou synthétique, élastomère thermo-élastique, néoprène, et des mélanges de ceux-ci.
